# EUROPEAN PATENT SPECIFICATION

(11) **EP 4 541 562 B1**
(45) Date of publication and mention of the grant of the patent: **28.10.2026**
(21) Application number: 25158630.1
(22) Date of filing: 03.01.2023
(51) Int. Cl.: B29C 65/32, B29C 65/18, B29C 65/36, B29C 65/46, B29L 31/30

(54) **INDUCTION WELDING ASSEMBLY**
INDUKTIONSSCHWEISSBAUGRUPPE
ENSEMBLE DE SOUDAGE PAR INDUCTION

(30) Priority: 03.01.2022 US 202217567736
(43) Date of publication of application: 23.04.2025
(62) Document number(s) of the earlier application(s) in accordance with Art. 76 EPC: 23150201.4 / 4 212 313
(73) Proprietor: Rohr, Inc., Chula Vista, CA 91910-2098 (US)
(72) Inventor: MITROVIC, Milan, Del Mar 92014 (US); HUANG, Jonathan S., Pasadena 91101 (US); VAN TOOREN, Michael, San Diego 92122 (US)
(74) Representative: Dehns

(56) References cited:
- EP-B1- 0 513 391
- CN-U- 207 639 512
- CN-U- 211 375 048
- US-A1- 2004 048 537

## Description

### FIELD

The present disclosure (invention) relates generally to induction welding of thermoplastic composite structures, and more specifically to systems and methods for induction welding a stiffener to a thermoplastic composite structure.

### BACKGROUND

Many aircraft thermoplastic composite structures are formed using stiffeners comprised of a thermoplastic, a thermoplastic material, a metallic material, or the like to reinforce or stiffen the structure. These stiffeners typically provide the structure with resistance to compression buckling or bending, making the structure desirably less flexible when put under a shearing, tensile, or compressive stress, or the like. These stiffeners are joined to the thermoplastic structure by induction welding. Induction welding utilizes electromagnetic induction to heat a workpiece. An induction coil is energized with electrical current which generates an electromagnetic field that heats a workpiece and binds it to a thermoplastic structure. As a stiffener is laid up in a thermoplastic structure, induction welding can generate eddy currents which can heat the edges of the stiffener, leading to higher temperatures that can damage the thermoplastic structure.

CN 211 375 048 U discloses a millimeter-wave radar simulator shielding box for intelligent automobile electromagnetic compatibility testing.

CN 207 639 512 U discloses an insect virus assisted self-propagating device.

EP 0 513 391 B1 discloses an electro-fusion fitting for joining a synthetic resin pipe.

US2016/136879 A1 discloses a method of joining a skin panel and stringer comprising positioning the skin panel and the stringer on top such that it least partially overlays it and operating an induction welding system having a tool surface and a coil to weld the stringer to the skin panel by operating over a length of the stringer for a time period. A susceptor welding tape is positioned between the stringer and the skin panel.

### SUMMARY

According to the present invention, there is provided an induction welding assembly as claimed in claim 1. Some embodiments of the invention are provided in claims dependent from claim 1.

### BRIEF DESCRIPTION OF THE DRAWINGS

FIG. 1 illustrates an aircraft engine nacelle having a fan cowl on the outside, in accordance with various embodiments;
FIG. 2 illustrates an interior view of a fan cowl with stiffeners, in accordance with various embodiments;
FIG. 3 illustrates an offset view of a stiffener overlaying a thermoplastic composite and a removable metal mask overlying the thermoplastic composite, in accordance with an arrangement outside the wording of the claims;
FIG. 4 illustrates an offset view of a stiffener overlaying a thermoplastic composite and a removable metal mask overlying the thermoplastic composite, in accordance with various embodiments;
FIG. 5 illustrates a top view of a removeable metal mesh overlaying the thermoplastic composite, in accordance with various embodiments;
FIG. 6A illustrates a cross-section view of a first workpiece overlayed by a second workpiece along an x-x axis, specifically a thermoplastic composite overlayed by a stiffener, in accordance with various embodiments;
FIG. 6B illustrates a section of the cross-section view of 6A during operation of an induction welding tool, in accordance with various embodiments;
FIG. 7A illustrates a cross-section view of a first workpiece overlayed by a second workpiece along an x-x axis, specifically a thermoplastic composite overlayed by a stiffener, in accordance with various embodiments;
FIG. 7B illustrates a section of the cross-section view of 7A during operation of an induction welding tool, in accordance with various embodiments;
FIG. 8 illustrates a method for induction welding of a stiffener to a thermoplastic component, in accordance with various embodiments; and
FIG. 9 illustrates a method for induction welding of a stiffener to a thermoplastic component, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein. Thus, the detailed description herein is presented for purposes of illustration only and not of limitation. The scope of the disclosure is defined by the appended claims. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

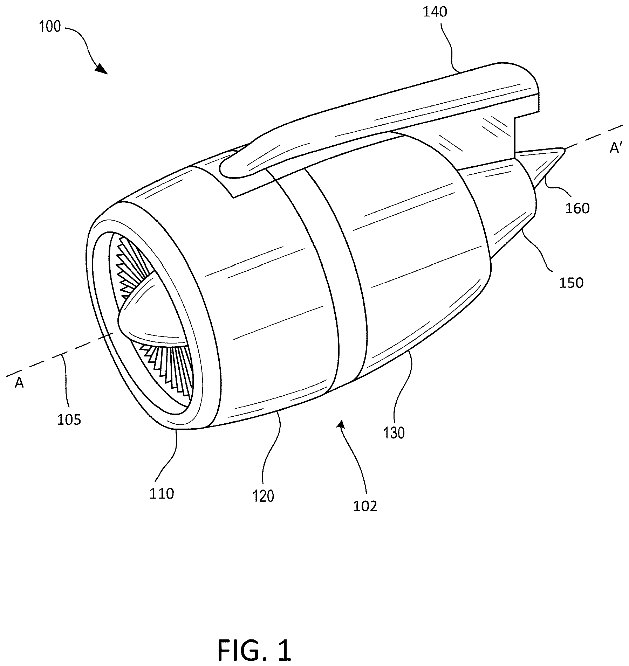

FIG. 1 illustrates a nacelle 100 for a gas turbine engine according to various embodiments. The nacelle for a gas turbine engine may be suitable for an aircraft. The nacelle 100 can comprise a centerline A-A' 105. Nacelle 100 can comprise an inlet 110, a fan cowl 120, and a thrust reverser 130. The fan cowl 120 can comprise a stiffener 102 configured to reinforce the fan cowl 120. In various embodiments, stiffeners as disclosed herein can be comprised of a thermoplastic, a thermoplastic composite material, a metallic material, or the like. Stiffener 102 comprises a thermoplastic composite material. Nacelle 100 can be coupled to a pylon 140, which can mount the nacelle 100 to an aircraft wing or aircraft body. A nozzle 150 can surround a center body 160, between which an engine exhaust stream exits to provide additional thrust.

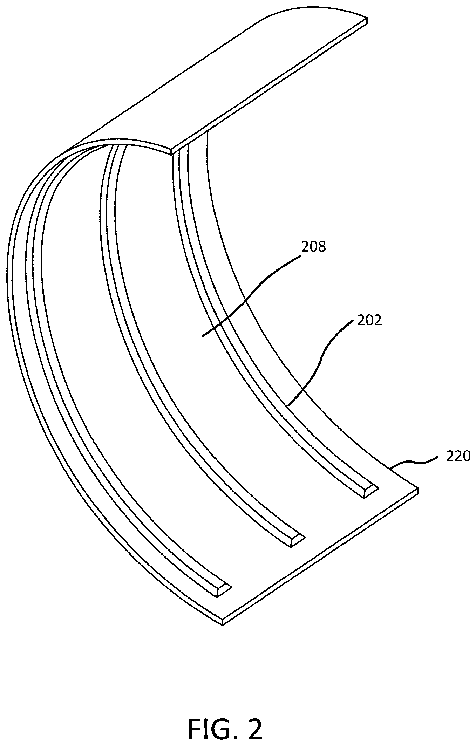

Referring to FIG. 2, a portion of an aircraft fan cowl 220 is illustrated according to various embodiments. In various embodiments, the fan cowl 220 can be comprised of a metallic material, a thermoplastic, a thermoplastic composite material, or the like. In various embodiments, the fan cowl 220 can be a thermoplastic composite structure. In such embodiments, the fan cowl 220 can include at least one stiffener 202 formed along an inner surface or skin 208 of the fan cowl 220. The stiffener 202 can be formed along the skin 208 according to any desirable orientation, geometry, or symmetry, including, for example, a fully interconnected grid stiffening symmetry. A stiffener 202 in a fan cowl 220 is described, however, the stiffener 202 can be utilized in any other suitable aircraft structure, including for example, a fuselage, a wing, panels and substructures thereof, and the like. In various embodiments, stiffeners as disclosed herein can be comprised of a thermoplastic, a thermoplastic composite material, a metallic material, or the like. Stiffener 202 comprises a thermoplastic composite material.

Although FIG 1. and FIG. 2 may disclose stiffeners used within fan cowls, various embodiments of the below referenced methods and system can be applied to any other thermoplastic composite structures within a nacelle. In various embodiments, the below referenced methods and systems can be applied to an inlet inner barrel, a translating sleeve, and an inner fixed structure.

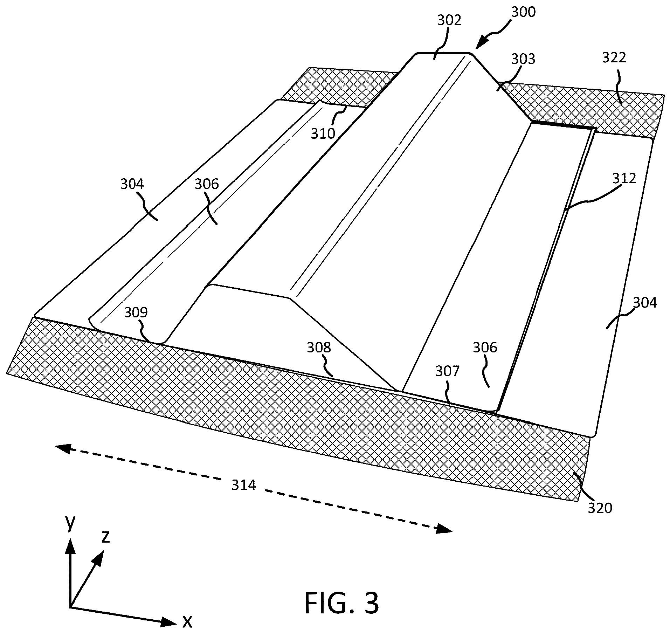

In reference to FIG. 3, a first workpiece shown as a thermoplastic composite structure 304 can be coupled to a second workpiece shown as a stiffener 300 using an induction welding process. In various embodiments, stiffeners as disclosed herein can be comprised of a thermoplastic, a thermoplastic composite material, a metallic material, or the like. Stiffener 300 comprises a thermoplastic composite material. The stiffener 300 can comprise a stiffener width 314 and a stiffener length 312. The stiffener width 314 and the stiffener length 312 can form a perimeter of the stiffener 300.

In various embodiments, the thermoplastic composite structure 304 can further comprise a thermoplastic composite skin 308. The stiffener 300 can further comprise a stiffener cap 302 and a stiffener web 303 disposed along the length of the stiffener cap 302. In various embodiments, the stiffener web 303 may be offset along the y-axis from a surface of thermoplastic composite skin 308, for example, at a substantially 45-degree angle. In various embodiments, the stiffener web 303 may be offset from the thermoplastic composite skin 308 at any desirable angle, or any angle suitable for reinforcing a thermoplastic composite structure. The stiffener 300 can further comprise a stiffener flange 306 disposed outward in the positive x-direction from the stiffener web 303. The stiffener can further comprise a first edge 309 and a second edge 310.

In various embodiments, the stiffener flange 306 may be welded to the thermoplastic composite skin 308 at a welding region 307. The thermoplastic composite skin 308 can degrade as the heat generated by induction welding reaches the edges of the stiffener 300. This may be caused by inconsistent eddy currents generated along the thermoplastic composite skin 308, as well as inconsistent heat generation at the welding region 307. In various embodiments, a first removable metal mask 320 can be used in induction welding of the thermoplastic composite structure 304 to the stiffener 300 to reduce the eddy currents produced in the thermoplastic composite structure 304. The first removable metal mask 320 can be positioned adjacent to the first edge 309 of the stiffener 300 in the negative z-direction and on top of the thermoplastic composite structure 304 in the positive y-direction. In various embodiments, a second removable metal mask 322 can be used in induction welding of the thermoplastic composite structure 304 to the stiffener 300 to reduce the eddy currents produced in the thermoplastic composite structure 304. The second removable metal mask 322 can be positioned adjacent to the second edge 310 in the positive z-direction of the stiffener 300 and on top of the thermoplastic composite structure 304 in the positive y-direction.

In various embodiments, both the first removable metal mask 320 and the second removable metal mask 322 can be used during the induction welding process. The first removable metal mask 320 and the second removable metal mask 322 can be equal to or greater in length in the x-direction than the stiffener width 314.

The first removable metal mask 320 and the second removable metal mask 322 can each comprise a metal mesh configured to at least partially overlay the thermoplastic composite structure 304. The metal mesh can function similar to a faraday cage to attenuate the electromagnetic field that induces eddy currents during the induction welding process. This attenuation of the induced eddy currents in these localized areas can help reduce the temperature achieved in those localized areas. A metal mesh with a higher electrical conductivity can result in better attenuation of the electromagnetic field. A metal mesh with higher electrical conductivity can result from a metal mesh with higher density. The density of a metal mesh can be determined by the percentage of metal mass to empty space in the metal mesh. In various embodiments, the electrical conductivity of the metal mesh can be between 1.5 million siemens per meter and 20 million siemens per meter, between 2 million siemens per meter and 15 million siemens per meter, and 2.5 million siemens per meter and 10 million siemens per meter. In various embodiments, the metal mesh can comprise a conductive metal such as copper, aluminum and the like.

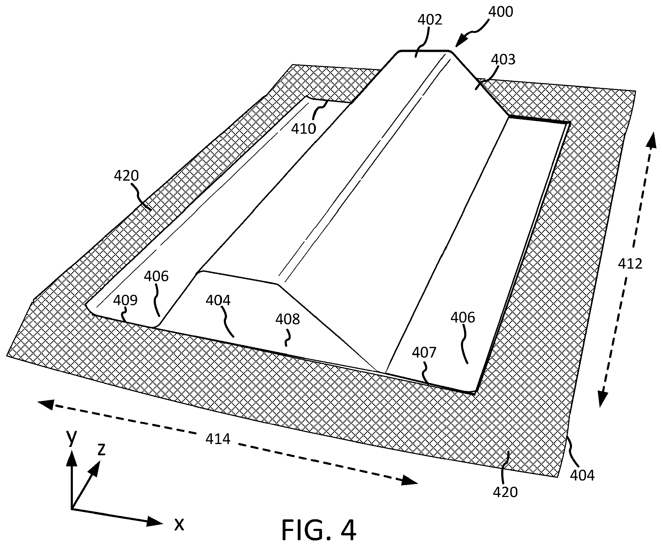

In reference to FIG. 4, a first workpiece shown as a thermoplastic composite structure 404 can be coupled to a second workpiece shown as a stiffener 400 using an induction welding process. In various embodiments, stiffeners as disclosed herein can be comprised of a thermoplastic, a thermoplastic composite material, a metallic material, or the like. Stiffener 400 comprises a thermoplastic composite material. The stiffener 400 can comprise a stiffener width 414 and a stiffener length 412. The stiffener width 414 and the stiffener length 412 can form a perimeter of the stiffener 400.

In various embodiments, the thermoplastic composite structure 404 can further comprise a thermoplastic composite skin 408. The stiffener 400 can further comprise a stiffener cap 402 and a stiffener web 403 disposed along the length of the stiffener cap 402. In various embodiments, the stiffener web 403 may be offset along the y-axis from a surface of thermoplastic composite skin 408, for example, at a substantially 45-degree angle. In various embodiments, the stiffener web 403 may be offset from the thermoplastic composite skin 408 at any desirable angle, or any angle suitable for reinforcing a thermoplastic composite structure. The stiffener 400 can further comprise a stiffener flange 406 disposed outward in the positive x-direction from the stiffener web 403. The stiffener can further comprise a first edge 409 and a second edge 410.

In various embodiments, the stiffener flange 406 may be welded to the thermoplastic composite skin 408 at a welding region 407. In various embodiments, a removable metal mask 420 can be used in induction welding of the thermoplastic composite structure 404 to the stiffener 400 to reduce the eddy currents produced in the thermoplastic composite structure 404. In FIG. 4, the removable metal mask 420 is partially covering the thermoplastic composite structure. The removable metal mask 420 can be positioned adjacent to the first edge 409 and the second edge 410, on top of the thermoplastic composite structure 404 in the positive y-direction, such that it masks the thermoplastic composite structure 404 and exposes the stiffener 400. In various embodiments, the length and width of the removable metal mask 420 can greater than the stiffener length 412 and the stiffener width 414, respectively.

The removable metal mask 420 can comprise a metal mesh configured to at least partially overlay the thermoplastic composite structure 404. The metal mesh can have the same properties and composition as previously described for the metal mesh of the first removable metal mask 320 and the second removable metal mask 322.

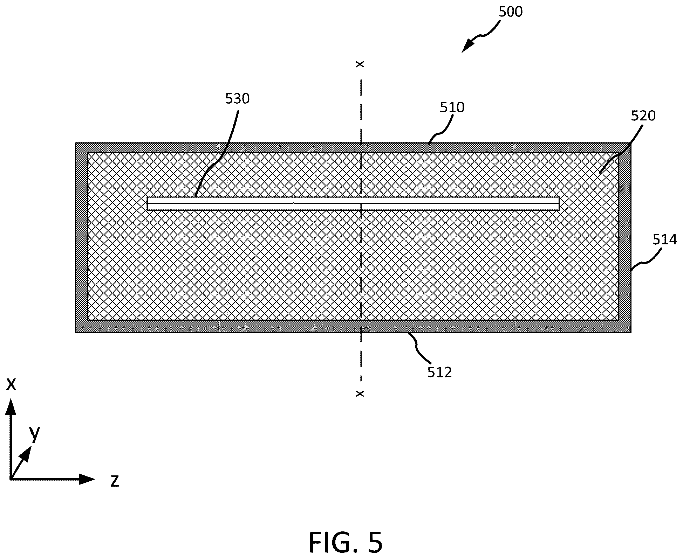

In reference to FIG. 5, a removable metal mask 500 used in induction welding of a first workpiece to a second workpiece is shown. The removable metal mask 500 comprises a metal mesh 520 and a workpiece opening 530 disposed within the metal mesh 520. The workpiece opening 530 is configured to at least partially mask a portion of the first workpiece and at least partially expose the second workpiece. The metal mesh 520 can have the same properties as described previously for the metal mesh of the first removable metal mask 320.

The workpiece opening 530 can be the same or within 2% of the size of the second workpiece. The metal mesh 520 can be configured to contact each perimeter edge of the second workpiece, such that there may not be any space in the zx-plane between the second workpiece and the removeable metal masks 520.

In various embodiments, the removable metal mask 500 can comprise a metal frame 510. In various embodiments, the metal frame 510 can comprise a metallic material. Exemplary metallic materials for the metal frame 510 include copper, copper alloys, aluminum, aluminum alloys, various iron alloys such as steel and the like. The metal frame 510 can be a solid metal frame or a hollow metal frame. In various embodiments, the metal frame 510 can comprise a frame width 514 and a frame length 512.

In various embodiments, the frame width 514 can be greater than the second workpiece width. In various embodiments, the frame length 512 can be greater than the second workpiece length. Therefore, the workpiece opening 530 can be configured to expose the second workpiece and workpiece opening 530 may cover a portion of the first workpiece. Additionally, the removable metal mask 500, as well as the removable metal masks 320, 322, and 420 can comprise various geometries including a rectangle, a square, a triangle and other shapes of the like.

In various embodiments, the first workpiece can be a thermoplastic composite structure such as thermoplastic composite structures 304 and 404. In various embodiments, the second workpiece can be a stiffener such as stiffeners 300 and 400.

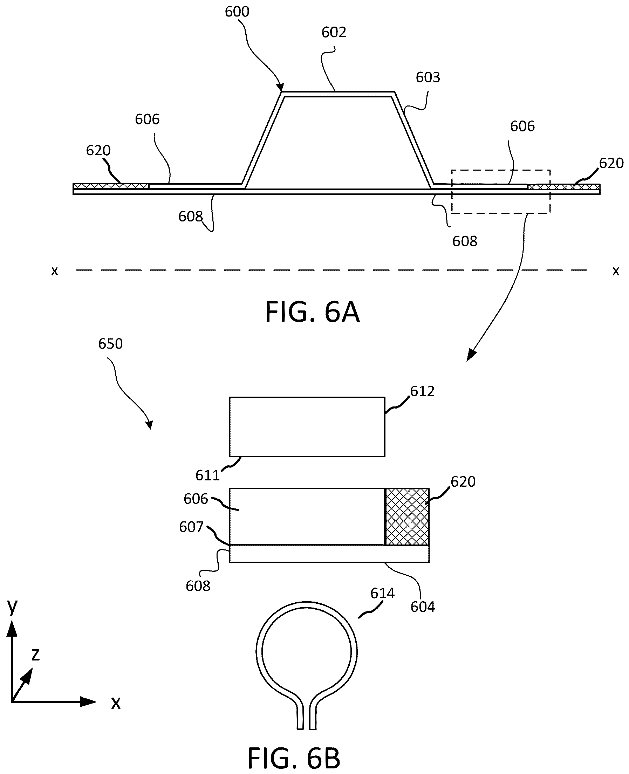

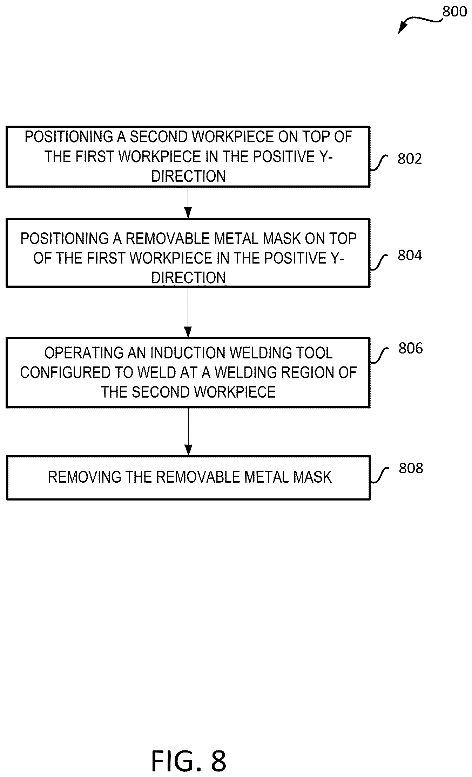

With reference to FIGS. 6A, 6B, and 8, a cross section along the x-axis of a first workpiece shown as a thermoplastic composite skin 608 and a second workpiece shown as a stiffener 600 during an induction welding process 800. The thermoplastic composite structure 604 can further comprise a thermoplastic composite skin 608. In various embodiments, stiffeners as disclosed herein can be comprised of a thermoplastic, a thermoplastic composite material, a metallic material, or the like. Stiffener 600 comprises a thermoplastic composite material. The stiffener 600 can further comprise a stiffener cap 602 and a stiffener web 603 disposed along the length of the stiffener cap 602. In various embodiments, the stiffener web 603 may be offset along the y-axis from a surface of thermoplastic composite skin 608, for example, at a substantially 45-degree angle. In various embodiments, the stiffener web 603 may be offset from the thermoplastic composite skin 608 at any desirable angle, or any angle suitable for reinforcing a thermoplastic composite structure. The stiffener 600 can further comprise a stiffener flange 606 disposed outward in the positive x-direction from the stiffener web 603.

In various embodiments, the stiffener flange 606 may be welded to the thermoplastic composite skin 608 at a welding region 607 as shown in FIG. 6A. The welding region 607 can be disposed along the entire length or the partial length of the stiffener 600 in the z-direction. In various embodiments, a removable metal mask 620 can be used in induction welding of the thermoplastic composite structure 604 to the stiffener 600. In various embodiments, the removable metal mask 620 can be the removable metal masks described previously as removable metal masks 420 and 520.

In FIG. 6B, a cross-section of an induction welding tool 612 is shown. The induction welding tool 612 may have an induction welding tool surface 611 configured to interact with the stiffener flange 606 and the thermoplastic composite structure 604. The induction welding tool 612 can be located proximate the stiffener flange 606 in the positive y-direction. In various embodiments, a coil 614 can be located proximate the thermoplastic composite structure 604 in the negative y-direction.

In various embodiments, the coil 614 may be configured to energize with electrical current. The energized coil 614 may be configured to generate an electromagnetic field that heats the induction welding tool 612. In various embodiments, the heat generated by the coil 614 may be configured to enable the induction welding tool 612 to weld the stiffener flange 606 to the thermoplastic composite skin 608 at a welding region 607.

With combined reference to FIG. 8, a method 800 for joining a first workpiece to a second workpiece is disclosed. Method 800 includes the steps of positioning a second workpiece (shown as stiffener 600) on top of the first workpiece (shown as thermoplastic composite structure 604) in the positive y-direction (step 802), positioning a removable metal mask 620 on top of the first workpiece (thermoplastic composite structure 604) in the positive y-direction (step 804), operating an induction welding tool 612 configured to weld at a welding region 607 of the second workpiece (step 806), and removing the removable metal mask 620 (step 808). In various embodiments, the first workpiece can be the thermoplastic composite structure 604 and the second workpiece can be the stiffener 600.

In various embodiments, the step 802 can further comprise the stiffener 600 at least partially overlaying the top of the first workpiece. In various embodiments, the step 804 can further comprise the metal mesh, shown in FIGS. 6A and 6B as 620, configured to at least partially mask the thermoplastic composite structure 604 and at least partially expose the stiffener, shown in FIGS. 6A and 6B as 600.

In various embodiments, the induction welding may further comprise operating an induction welding tool 612 configured to weld at the welding region 607 of stiffener 600, wherein an induction welding tool 612 operates for a length of the stiffener 600 in the z-direction for a welding period. The welding period can be adjusted depending on the operational temperature of the welding tool. For example, a welding tool 612 operating at a temperature above 500° C can have a shorter welding period than a welding tool 612 operating at a temperature below 400° C. In various embodiments, the induction welding tool 612 can comprises an induction welding tool surface 611 located proximate the second workpiece in the positive y-direction.

In various embodiments the induction welding tool 612 can comprise a coil 614 located proximate the first workpiece in the negative y-direction. In various embodiments, the coil 614 can be configured to energize with alternating current to generate an electromagnetic field. The electromagnetic field can be configured to heat the welding region 607, wherein the heat generated by the coil is configured to weld at a welding temperature. In various embodiments, the welding temperature can be between 200° C and 600° C, between 220° C and 450° C, and between 250° C and 400° C. In various embodiments, when the induction welding tool 612 is at the welding temperature, the induction welding tool 612 can weld the stiffener 600 to the thermoplastic composite structure 604 at the welding region 607. In various embodiments, the operating the induction welding tool (step 806) can comprise welding the stiffener flange 606 to the thermoplastic composite skin 608.

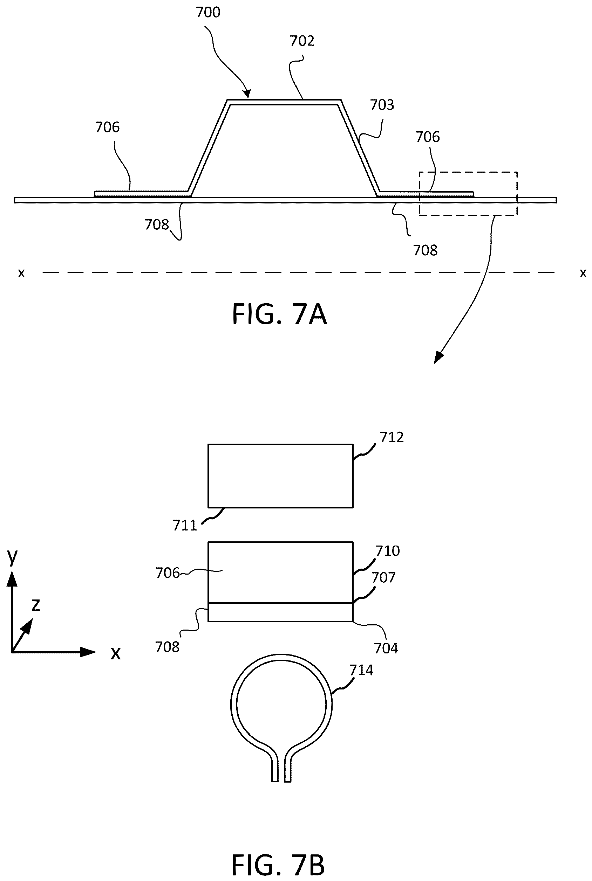

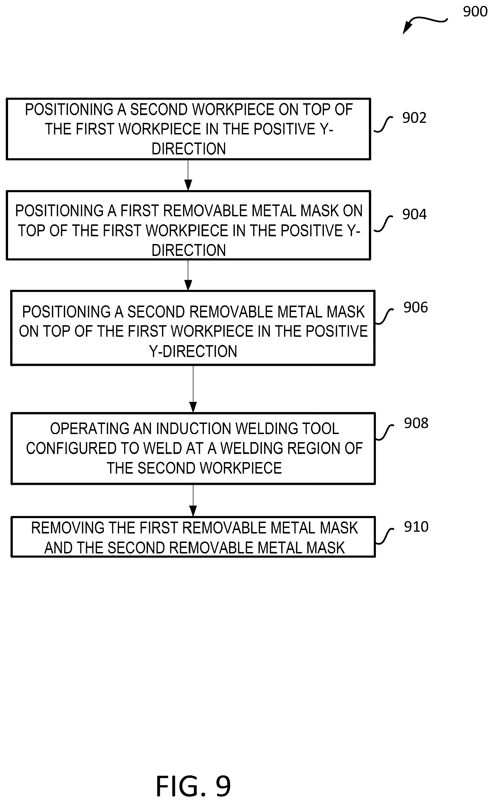

With reference to FIGS. 7A, 7B and 9, a cross section along the x-axis of a first workpiece shown as a thermoplastic composite structure 704 and a second workpiece shown as a stiffener 700 during an induction welding process 900. The thermoplastic composite structure 704 can further comprise a thermoplastic composite skin 708. In various embodiments, stiffeners as disclosed herein can be comprised of a thermoplastic, a thermoplastic composite material, a metallic material, or the like. Stiffener 700 comprises a thermoplastic composite material. The stiffener 700 can further comprise a stiffener cap 702 and a stiffener web 703 disposed along the length of the stiffener cap 702. In various embodiments, the stiffener web 703 may be offset along the y-axis from a surface of thermoplastic composite skin 708, for example, at a substantially 45-degree angle. In various embodiments, the stiffener web 703 may be offset from the thermoplastic composite skin 708 at any desirable angle, or any angle suitable for reinforcing a thermoplastic composite structure. The stiffener 700 can further comprise a stiffener flange 706 disposed outward in the positive x-direction from the stiffener web 703.

In various embodiments, the stiffener flange 706 may be welded to the thermoplastic composite skin 708 at a welding region 707 as shown in FIG. 7A. The welding region 707 can be disposed along the entire length or the partial length of the stiffener 700 in the z-direction. In various embodiments, a first removable metal mask and a second removable metal mask can be used in induction welding of the thermoplastic composite structure 704 to the stiffener 700. The first removable metal mask and the second removable metal mask cannot be seen from the cutaway view in FIGS. 7A and 7B as they extend along the zx-plane. However, in various embodiments, the first removable metal mask can be the removable metal mask 320 and the second removable metal mask can be the removable metal mask 322 as described previously.

In FIG. 7B, a cross-section of an induction welding tool 712 is shown. The induction welding tool 712 may have an induction welding tool surface 711 configured to interact with the stiffener flange 706 and the thermoplastic composite structure 704. The induction welding tool 712 can be located proximate the stiffener flange 706 in the positive y-direction. In various embodiments, a coil 714 can be located proximate the thermoplastic composite structure 704 in the negative y-direction.

In various embodiments, the coil 714 may be configured to energize with electrical current. The energized coil 714 may be configured to generate an electromagnetic field that heats the induction welding tool 712. In various embodiments, the heat generated by the coil 714 may be configured to enable the induction welding tool 712 to weld the stiffener flange 706 to the thermoplastic composite skin 708 at a welding region 707.

With reference to FIG. 9, a method 900 for joining a first workpiece to a second workpiece is disclosed. Method 900 includes the steps of positioning a second workpiece (shown as stiffener 700) on top of the first workpiece (shown as thermoplastic composite structure 704) in the positive y-direction (step 902), positioning a first removable metal mask on top of the first workpiece (thermoplastic composite structure 704) in the positive y-direction (step 904), positioning a second removable metal mask on top of the first workpiece (thermoplastic composite structure 704) in the positive y-direction (step 906), operating an induction welding tool 712 configured to weld at a welding region 707 of the second workpiece (stiffener 700) (step 908), and removing the first removable metal mask and the second removable metal mask (step 910). In various embodiments, the first workpiece can be the thermoplastic composite structure 704 and the second workpiece can be the stiffener 700.

In various embodiments, the step 902 can further comprise the stiffener 700 at least partially overlaying the top of the first workpiece. In various embodiments, the step 904 can further comprise the first removable metal mask comprising a metal mesh as described for the first removable metal mask 320, configured to at least partially mask the thermoplastic composite structure 704. In various embodiments, the step 906 can further comprise the second removable metal mask comprising a metal mesh as described for the second removable metal mask 322, configured to at least partially mask the thermoplastic composite structure 704.

In various embodiments, the induction welding may further comprise operating an induction welding tool 712 configured to weld at the welding region 707 of stiffener 700, wherein an induction welding tool 712 operates for a length of the stiffener 700 in the z-direction for a welding period. The welding period can be adjusted depending on the operational temperature of the welding tool. For example, a welding tool 712 operating at a temperature above 500° C can have a shorter welding period than a welding tool 612 operating at a temperature below 400° C. In various embodiments, the induction welding tool 612 can comprise an induction welding tool surface 711 located proximate the second workpiece in the positive y-direction.

In various embodiments the induction welding tool 712 can comprise a coil 714 located proximate the first workpiece in the negative y-direction. In various embodiments, the coil 714 can be configured to energize with alternating current to generate an electromagnetic field. The electromagnetic field can be configured to heat the welding region 707, wherein the heat generated by the coil is configured to weld at a welding temperature. In various embodiments, the welding temperature can be between 200° C and 600° C, between 220° C and 450° C, and between 250° C and 400° C. In various embodiments, when the induction welding tool 712 is at the welding temperature, the induction welding tool 712 can weld the stiffener 700 to the thermoplastic composite structure 704 at the welding region 707. In various embodiments, the operating the induction welding tool (step 906) can comprise welding the stiffener flange 706 to the thermoplastic composite skin 708.

The scope of the disclosure is accordingly to be limited by nothing other than the appended claims.

## Claims

1. An induction welding assembly comprising:
a first workpiece;
a second workpiece;
a removable metal mask (500) comprising:
a metal mesh (520) comprising at least one of copper and aluminum, the metal mesh (520) surrounding a perimeter of the second workpiece; and
a workpiece opening (530) disposed within the metal mesh (520), the workpiece opening (530) configured to mask the first workpiece and at least partially expose the second workpiece; and
an induction welding tool (612) configured to weld at a welding region (607) of the second workpiece.

2. The induction welding assembly of claim 1, wherein the metal mesh (520) comprises an electrical conductivity between 1.5 million siemens per meter and 20 million siemens per meter.

3. The induction welding assembly of claim 1 or 2, wherein the removable metal mask (500) further comprises a metal frame (510), wherein the metal mesh (520) is disposed within the metal frame (510).

4. The induction welding assembly of claim 3, wherein the metal frame (510) comprises:
copper;
copper alloys;
aluminum;
aluminum alloys; and/or
steel alloys.

5. The induction welding assembly of claim 3 or 4, wherein the metal frame (510) is a solid metal frame.

6. The induction welding assembly of claim 3 or 4, wherein the metal frame (510) is a hollow metal frame.

7. The induction welding assembly of any of claims 3 to 6, wherein the metal frame (510) comprises a frame width (514) that is greater than a width of the second workpiece.

8. The induction welding assembly of any of claims 3 to 7, wherein the metal frame (510) comprises a frame length (512) that is greater than a length of the second workpiece.

9. The induction welding assembly of any preceding claim, wherein the first workpiece is a thermoplastic composite structure (404; 604, 704) comprising a thermoplastic composite skin (408; 608, 708), and wherein the second workpiece is a stiffener (102; 202; 400; 600, 700), the stiffener (102; 202; 400; 600, 700) comprising:
a stiffener cap (402; 602, 702),
a stiffener web (403; 603, 703) disposed along the length of the stiffener cap (402; 602, 702), and
a stiffener flange (406; 606, 706) disposed outward from the stiffener web (403; 603, 703), wherein the stiffener flange (406; 606, 706) overlays the thermoplastic composite skin (408; 608, 708).

10. The induction welding assembly of any preceding claim, wherein the metal mesh (520) is further configured to attenuate the electromagnetic field that induces eddy currents during the induction welding.

11. The induction welding assembly of any preceding claim, wherein the workpiece opening (530) is within 2% of the size of the second workpiece.

12. The induction welding assembly of any preceding claim, wherein the metal mesh (520) is configured to contact each perimeter edge of the second workpiece.

## Patentansprüche

1. Induktionsschweißbaugruppe, umfassend:
ein erstes Werkstück;
ein zweites Werkstück;
eine abnehmbare Metallmaske (500), umfassend:
ein Metallgeflecht (520), umfassend mindestens eines von Kupfer und Aluminium, wobei das Metallgeflecht (520) einen Umfang des zweiten Werkstücks umschließt; und
eine Werkstücköffnung (530), die innerhalb des Metallgeflechts (520) angeordnet ist, wobei die Werkstücköffnung (530) ausgelegt ist, um das erste Werkstück abzudecken und das zweite Werkstück mindestens teilweise frei zu lassen; und
ein Induktionsschweißwerkzeug (612), das ausgelegt ist, um an einem Schweißbereich (607) des zweiten Werkstücks zu schweißen.

2. Induktionsschweißbaugruppe nach Anspruch 1, wobei das Metallgeflecht (520) eine elektrische Leitfähigkeit zwischen 1,5 Millionen Siemens pro Meter und 20 Millionen Siemens pro Meter umfasst.

3. Induktionsschweißbaugruppe nach Anspruch 1 oder 2, wobei die abnehmbare Metallmaske (500) ferner einen Metallrahmen (510) umfasst, wobei das Metallgeflecht (520) innerhalb des Metallrahmens (510) angeordnet ist.

4. Induktionsschweißbaugruppe nach Anspruch 3, wobei der Metallrahmen (510) umfasst:
Kupfer;
Kupferlegierungen;
Aluminium;
Aluminiumlegierungen; und/oder
Stahllegierungen.

5. Induktionsschweißbaugruppe nach Anspruch 3 oder 4, wobei der Metallrahmen (510) ein massiver Metallrahmen ist.

6. Induktionsschweißbaugruppe nach Anspruch 3 oder 4, wobei der Metallrahmen (510) ein hohler Metallrahmen ist.

7. Induktionsschweißbaugruppe nach einem der Ansprüche 3 bis 6, wobei der Metallrahmen (510) eine Rahmenbreite (514), die größer als eine Breite des zweiten Werkstücks ist, umfasst.

8. Induktionsschweißbaugruppe nach einem der Ansprüche 3 bis 7, wobei der Metallrahmen (510) eine Rahmenlänge (512), die größer als eine Länge des zweiten Werkstücks ist, umfasst.

9. Induktionsschweißbaugruppe nach einem der vorhergehenden Ansprüche, wobei das erste Werkstück eine thermoplastische Verbundstruktur (404; 604, 704), umfassend eine thermoplastische Verbundhaut (408; 608, 708), ist und wobei das zweite Werkstück eine Versteifung (102; 202; 400; 600, 700) ist, die Versteifung (102; 202; 400; 600, 700) umfassend:
eine Versteifungskappe (402; 602, 702),
einen Versteifungssteg (403; 603, 703), der entlang der Länge der Versteifungskappe (402; 602, 702) angeordnet ist, und
einen Versteifungsflansch (406; 606, 706), der von dem Versteifungssteg (403; 603, 703) nach außen angeordnet ist, wobei der Versteifungsflansch (406; 606, 706) die thermoplastische Verbundhaut (408; 608, 708) überdeckt.

10. Induktionsschweißbaugruppe nach einem der vorhergehenden Ansprüche, wobei das Metallgeflecht (520) ferner ausgelegt ist, um das elektromagnetische Feld, das während des Induktionsschweißens Wirbelströme induziert, abzuschwächen.

11. Induktionsschweißbaugruppe nach einem der vorhergehenden Ansprüche, wobei die Werkstücköffnung (530) innerhalb von 2 % der Größe des zweiten Werkstücks liegt.

12. Induktionsschweißbaugruppe nach einem der vorhergehenden Ansprüche, wobei das Metallgeflecht (520) ausgelegt ist, um jede Umfangskante des zweiten Werkstücks zu berühren.

## Revendications

1. Ensemble de soudage par induction comprenant :
une première pièce ;
une seconde pièce ;
un masque métallique amovible (500) comprenant :
un treillis métallique (520) comprenant au moins l'un parmi du cuivre et de l'aluminium, le treillis métallique (520) entourant un périmètre de la seconde pièce ; et
une ouverture pour pièce (530) disposée à l'intérieur du treillis métallique (520), l'ouverture pour pièce (530) étant configurée pour masquer la première pièce et exposer au moins en partie la seconde pièce ; et
un outil de soudage par induction (612) configuré pour réaliser une soudure au niveau d'une région de soudage (607) de la seconde pièce.

2. Ensemble de soudage par induction selon la revendication 1, dans lequel le treillis métallique (520) présente une conductivité électrique comprise entre 1,5 million de siemens par mètre et 20 millions de siemens par mètre.

3. Ensemble de soudage par induction selon la revendication 1 ou 2, dans lequel le masque métallique amovible (500) comprend en outre un cadre métallique (510), dans lequel le treillis métallique (520) est disposé à l'intérieur du cadre métallique (510).

4. Ensemble de soudage par induction selon la revendication 3, dans lequel le cadre métallique (510) comprend :
du cuivre ;
des alliages de cuivre ;
de l'aluminium ;
des alliages d'aluminium ; et/ou
des alliages d'acier.

5. Ensemble de soudage par induction selon la revendication 3 ou 4, dans lequel le cadre métallique (510) est un cadre métallique solide.

6. Ensemble de soudage par induction selon la revendication 3 ou 4, dans lequel le cadre métallique (510) est un cadre métallique creux.

7. Ensemble de soudage par induction selon l'une quelconque des revendications 3 à 6, dans lequel le cadre métallique (510) comprend une largeur de cadre (514) qui est supérieure à une largeur de la seconde pièce.

8. Ensemble de soudage par induction selon l'une quelconque des revendications 3 à 7, dans lequel le cadre métallique (510) comprend une longueur de cadre (512) qui est supérieure à une longueur de la seconde pièce.

9. Ensemble de soudage par induction selon une quelconque revendication précédente, dans lequel la première pièce est une structure composite thermoplastique (404 ; 604, 704) comprenant un revêtement composite thermoplastique (408 ; 608, 708), et dans lequel la seconde pièce est un raidisseur (102 ; 202 ; 400 ; 600, 700), le raidisseur (102 ; 202 ; 400 ; 600, 700) comprenant :
une coiffe de raidisseur (402 ; 602, 702),
une âme de raidisseur (403 ; 603, 703) disposée dans le sens de la longueur de la coiffe de raidisseur (402 ; 602, 702), et
une semelle de raidisseur (406 ; 606, 706) disposée vers l'extérieur de l'âme de raidisseur (403 ; 603, 703), dans lequel la semelle de raidisseur (406 ; 606, 706) recouvre le revêtement composite thermoplastique (408 ; 608, 708).

10. Ensemble de soudage par induction selon une quelconque revendication précédente, dans lequel le treillis métallique (520) est en outre configuré pour atténuer le champ électromagnétique qui induit des courants de Foucault pendant le soudage par induction.

11. Ensemble de soudage par induction selon une quelconque revendication précédente, dans lequel l'ouverture pour pièce (530) est à 2 % près de la taille de la seconde pièce.

12. Ensemble de soudage par induction selon une quelconque revendication précédente, dans lequel le treillis métallique (520) est configuré pour entrer en contact avec chaque bord de périmètre de la seconde pièce.
